# EUROPEAN PATENT APPLICATION

(11) **EP 0 587 420 A1**
(43) Date of publication of application: **16.03.1994**
(21) Application number: 93307077.3
(22) Date of filing: 08.09.1993
(51) Int. Cl.: G01G 3/14, G01L 1/22

(54) **Weighing machine adjustment**

(30) Priority: 09.09.1992 GB 9219073
(71) Applicant: GEC AVERY LIMITED, Warley, West Midlands, B66 2LP (GB)
(72) Inventor: Ford, Michael William, Sutton Coldfield, West Midlands, B73 6UW (GB)
(74) Representative: Branfield, Henry Anthony

(57) **Abstract**

A parallelogram frame for a weighing apparatus comprises a first fixed member and a second opposed movable member, two parallel flexible members each extending between support points on a respective pair of ends of the first and second members to constrain movement of the second member along an axis parallel to the axis of the first member, the first or the second member including, extending substantially parallel to the member, pivotal about an end thereof to provide the support point for one end of one of the flexible members, and contained within the parallelogram, a lever for movement of said end in a direction parallel to the axis of the lever and adjusting means to adjust the angle between the lever and the member.

## Description

The present invention relates to weighing machines and adjusting means thereon which eliminate forces induced due to manufacturing tolerances.

Such forces are, for example, experienced where the weighing mechanism includes a parallelogram frame.

According to the present invention there is provided a parallelogram frame for a force sensor comprising a first fixed member and a second opposed movable member, two parallel flexible members each extending between support points on a respective pair of ends of the first and second members to constrain movement of the second member along an axis parallel to the axis of the first member, the first or the second member including, extending substantially parallel to the member, pivotal about an end thereof to provide the support point for one end of one of the flexible members, and contained within the parallelogram, a lever for movement of said end in a direction parallel to the axis of the lever and adjusting means to adjust the angle between the lever and the member.

The present invention will now be described by way of example, with reference to the accompanying drawings, in which :-
Figure 1 shows a schematic view of part of a prior art weighing machine;
Figure 2 shows a further view of the parallelogram frame of the weighing machine of Figure 1;
Figures 3, 3A and 4, 4A show two examples of parallelogram frames of the present invention for a force sensor for use in a weighing machine.

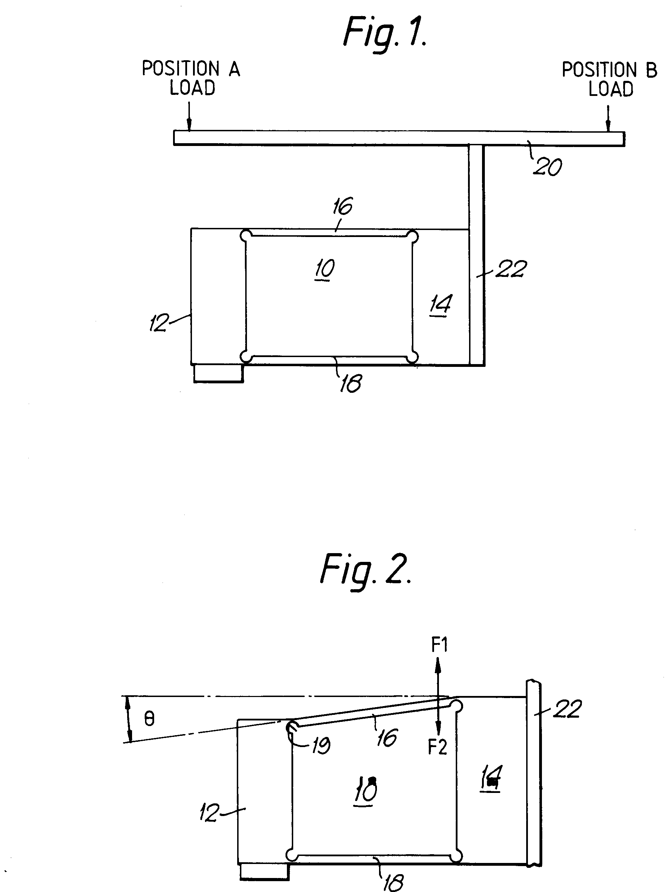

In Figure 1 a parallelogram frame 10 has a fixed member 12 rigidly attached to the body of a weighing machine (not shown). The fixed member 12 is attached to a movable member 14 by parallel upper and lower flexures 16, 18 respectively.

The movable member 14 supports a weighing platform 20 by a vertical support 22. If a load is placed on the platform 20 at position A, then an anticlockwise moment is produced about the support 22, placing flexure 16 in compression and flexure 18 in tension. If the load is placed on the platform 20 at position B, then a clockwise moment is produced about the support 22, placing flexure 16 in tension and flexure 18 in compression. Where the flexures 16, 18 are truly parallel, no vertical component of force results.

However, if the flexures 16 are not parallel but inclined at an angle 0, as shown exaggerated in Figure 2, then vertical force components F1, F2 are produced due to positioning the load other than centered on the support. Thus a false reading will be produced by the weighing machine where the load is not applied centrally.

Correcting this form of error on one piece weighing frames is usually achieved by removing material from the frame with a file. Thus on Figure 2 a point marked 19 would be filed. This would make the frame parallel. Note that the diagram is shown with an exaggerated error and only small amounts of material need to be removed.

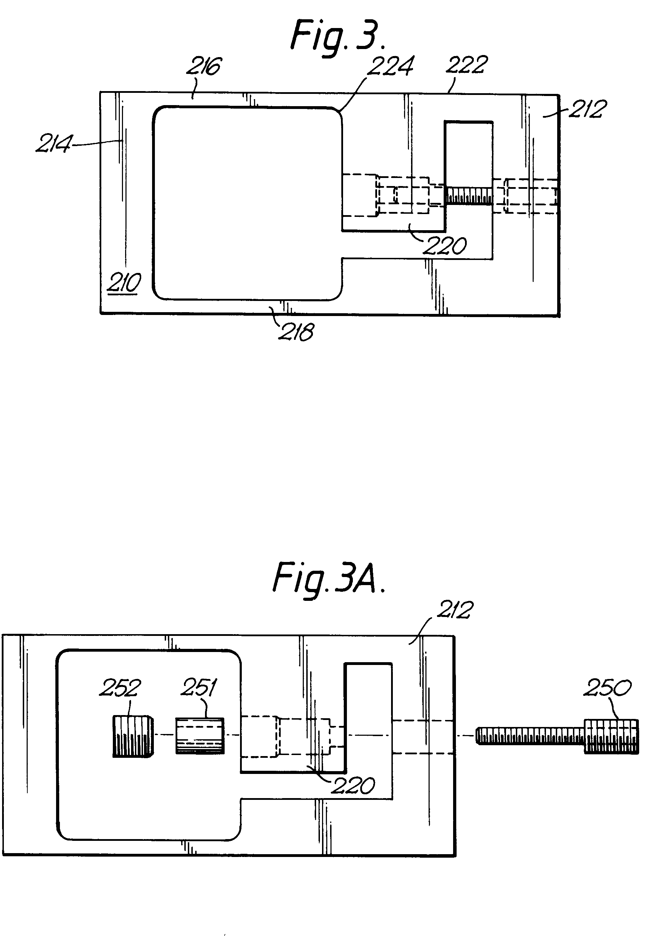

Considering Figure 3 a parallelogram frame 210 has a fixed member 212 rigidly attached to the body of a weighing machine (not shown). The fixed member 212 is attached to a moveable member 214 which supports a weighing platform (not shown) in a similar manner to the arrangement shown in Figure 1.

A lever 220 extends within the parallelogram frame 210 parallel to the fixed member 212. The lever 220 is connected to the fixed member 212 by a flexure 222 and to the upper flexure 216 at one end 224.

Movement of the lever 220 about flexure 222 so as to vary the angle between it and member 212 causes the end 224 of the flexure 216 to be raised or lowered adjusting the flexure 216.

Typically two adjustment screws are provided so that the opposite sides of the flexure 216 can be adjusted separately.

As stated previously the adjustment required is very small. A conventional screw used on its own would be too coarse. Considering now Figure 3A a method of fine adjustment is shown in more detail. A screw 250 having two threads of different pitches is utilised. This can be made up as a single item or by joining a threaded boss to a long grub screw.

The larger thread of screw 250 engages in the member 212. The smaller thread engages in a tapped bush 251. After assembly the bush 251 is clamped into the lever 220 by a grub screw 252. This method of construction provides a greatly increased ease of assembly.

When screw 250 is rotated one revolution it moves the pitch of the larger thread in member 212, and the pitch of the small thread in lever 220. Hence the relative movement between lever 220 and member 212 is the difference in pitches between the small and large thread. By careful selection of the two threads very fine adjustments can be made.

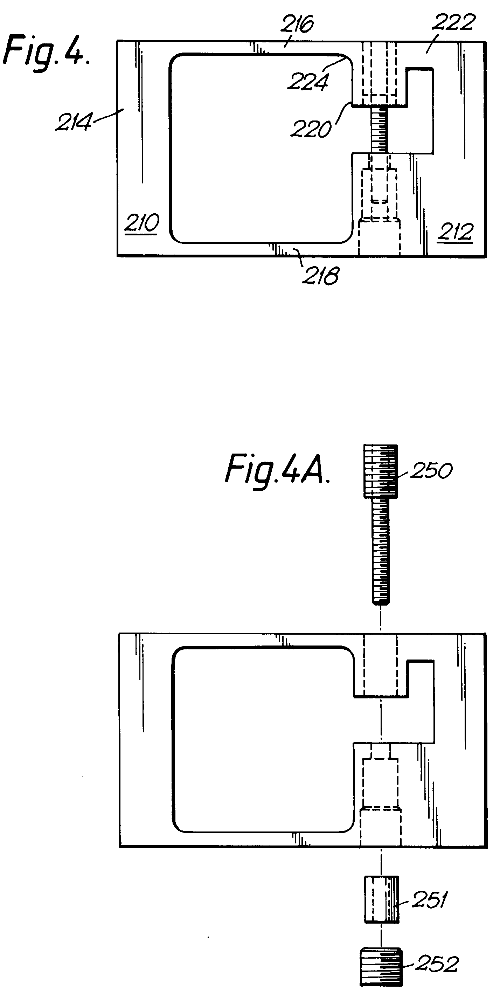

Figures 4 and 4A show another embodiment of the invention employing the same general principles as shown and described above for Figures 3 and 3A.

## Claims

1. A parallelogram frame for a force sensor comprising a first fixed member and a second opposed movable member, two parallel flexible members each extending between support points on a respective pair of ends of the first and second members to constrain movement of the second member along an axis parallel to the axis of the first member, the first or the second member including, extending substantially parallel to the member, pivotal about an end thereof to provide the support point for one end of one of the flexible members, and contained within the parallelogram, a lever for movement of said end in a direction parallel to the axis of the lever and adjusting means to adjust the angle between the lever and the member.

2. A parallelogram frame as claimed in Claim 1, wherein the adjusting means comprises screw means connecting the lever to the first or second member.

3. A parallelogram frame as claimed in Claim 1 or 2, wherein the adjusting means comprises a screw having first and second coaxial threads with different pitches, a mating threaded hole for the first screw thread in one of the lever and the member and a recess containing a bush having a mating threaded hole for the second screw thread in the other of the lever and the member and a clamping means for the bush.

4. A parallelogram frame as claimed in Claim 1, 2 or 3, the lever comprising first and second levers arranged in side-by-side relationship.

5. A force sensor, including a parallelogram frame as claimed in any preceding claim.

6. A weighing machine, including a force sensor as claimed in Claim 5.
